# FASCICULE DE BREVET EUROPEEN

(11) **EP 2 112 329 B1**
(45) Date de publication et mention de la délivrance du brevet: **19.10.2011**
(21) Numéro de dépôt: 09158462.3
(22) Date de dépôt: 22.04.2009
(51) Int. Cl.: F01D 11/00, F01D 11/12, F16J 15/44

(54) **Ensemble rotor/stator composé d'une une pièce thermomécanique de révolution autour d'un axe longitudinal comprenant au moins une couronne abradable destinée à un labyrinthe d'étanchéité**
Rotor/stator Teil mit einem thermomechanisches Drehteil um eine Längsachse, das mindestens einen Abriebring enthält, der für eine Labyrinthdichtung bestimmt ist
Rotor/stator assembly having a thermomechanical element rotating around a longitudinal axis comprising at least one abradable crown intended for a labyrinth seal

(30) Priorité: 23.04.2008 FR 0852718
(43) Date de publication de la demande: 28.10.2009
(73) Titulaire: SNECMA, 75015 Paris (FR)
(72) Inventeur: Caucheteux, Mathieu, 94000 Creteil (FR); Garcin, François, 75019 Paris (FR); Lombard, Jean-Pierre, 77830 Pamfou (FR); Triconnet, Nicolas, 77310 Saint Fargeau Ponthierry (FR)
(74) Mandataire: Cardy, Sophie Marie

(56) Documents cités:
- EP-A- 1 172 524
- EP-A- 1 840 339
- US-A- 4 531 362
- US-A- 5 439 348

## Description

L'invention concerne un ensemble rotor/stator comportant une première pièce thermomécanique de révolution autour d'un axe longitudinal, comprenant au moins une couronne abradable destinée à un labyrinthe d'étanchéité formant une première pièce thermomécanique appartenant à l'un parmi le stator et le rotor et une deuxième pièce thermomécanique de révolution appartenant à l'autre parmi le stator et le rotor. La présente invention se rapporte à un ensemble rotor/stator de turbomachine, et en particulier de moteur d'avion.

Le document EP 1 172 524 présente un ensemble rotor/stator dans lequel le rotor est un disque de turbine équipé d'aubes et le stator comporte une virole munie sur sa face intérieure de segments faisant face aux aubes. Selon ce document, la répartition des segments est optimisée en fonction de l'épaisseur de chaque segment.

Un labyrinthe d'étanchéité, encore appelé joint labyrinthe, comprend une partie tournante à ailettes (ou léchettes) avec un alésage statique recouvert d'une garniture en matériau abradable, ou une structure en nid d'abeilles capable de résister à des températures élevées.

Au démarrage du moteur, les ailettes du joint frottent légèrement contre la garniture, mordant dans cette dernière, ce qui aboutit à un écartement minimum. Ce jeu varie au cours des différents cycles de vol, selon la dilatation des pièces et la souplesse naturelle des parties mobiles.

Les léchettes de labyrinthes permettent d'assurer les étanchéités aérodynamiques entre des enceintes d'air sous des pressions différentes. Elles sont en général situées sur la partie rotor en vis-à-vis de parties statoriques recouvertes de la garniture en matériau abradable. Elles sont constituées principalement de « lames » de forme annulaire, continues ou segmentées en direction circonférentielle, pouvant être dirigées radialement vers l'intérieur ou vers l'extérieur.

En particulier, lorsqu'elles présentent une forme continue, les léchettes sont susceptibles d'entrer en contact avec le stator dans certaines configurations de fonctionnement. Pour éviter leur destruction dans ces situations, on équipe les stators de revêtements permettant l'interface et qui sont dénommés « abradables ». Dans ce cas, les séquences usuelles de pénétration des léchettes dans les abradables consistent en une coupe radiale associée à un déplacement axial («chariotage»).

Dans ce qui précède, on a considéré que les léchettes du labyrinthe d'étanchéité sont formées sur la partie tournante ou rotor, mais il existe des situations pour lesquelles les léchettes du labyrinthe d'étanchéité sont formées sur la partie statique ou stator, la couronne abradable en vis-à-vis étant disposée sur le rotor.

Lors de ces contacts entre les léchettes et la couronne abradable en vis-à-vis, il existe dans certains cas des configurations rendant le système formé du rotor et du stator instable du point de vue vibratoire.

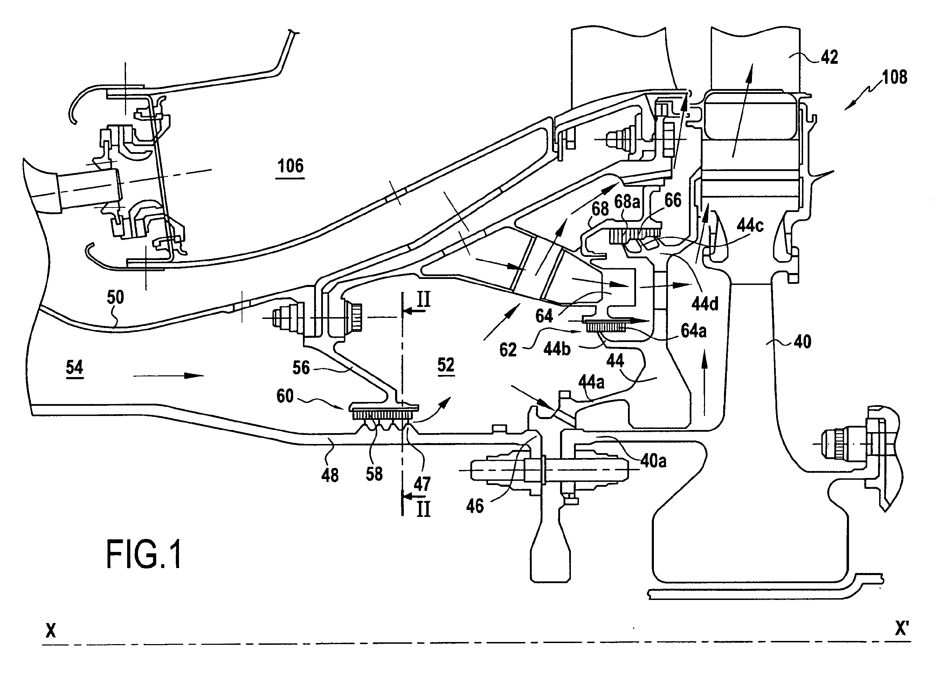

La figure 1 représente un exemple d'application dans lequel une couronne abradable est utilisée dans un labyrinthe d'étanchéité, en étant disposée en face de léchettes. Il s'agit du cas du circuit de ventilation d'une turbine à haute pression disposée en aval d'une chambre de combustion 106.

En particulier, on y trouve une turbine 108 avec son rotor de révolution, mobile en rotation autour d'un axe X-X'.

Le rotor de la turbine 108 comporte un disque de turbine 40 équipé d'aubes 42, et un flasque 44 disposé en amont du disque 40. Le disque 40 et le flasque 44 comportent chacun une bride amont, référencée 40a pour le disque 40 et 44a pour le flasque 44, pour leur fixation à l'extrémité aval 46 du cône aval 48 du compresseur haute pression entraîné par le rotor de la turbine 108.

Cet agencement de circuit de refroidissement comporte trois labyrinthes successifs de décharge.

Un premier labyrinthe de décharge 60 est formé en amont de l'enceinte 52 séparant le flasque 44 du fond de chambre et en aval de l'enceinte 54 séparant le cône aval 48 du compresseur à haute pression du carter intérieur 50 de la chambre de combustion 106. Ce premier labyrinthe de décharge 60 comprend des léchettes 47 formées sur le cône aval 48 et une couronne 58 de matériau abradable montée à l'extrémité d'un flasque 56 solidaire du carter intérieur 50.

Un deuxième labyrinthe de décharge 62 est situé sous des injecteurs 64, en aval de l'enceinte 52. Ce deuxième labyrinthe de décharge 62 est formé de léchettes 44b du flasque 44 et d'une couronne de matériau abradable 64a montée sur les injecteurs 64.

Le troisième labyrinthe de décharge 66 est situé au-dessus des injecteurs 64, et comporte trois léchettes 44c successives formées sur une portion coudée 44d du flasque 44 et une couronne d'étanchéité abradable 68a montée sur le carter intérieur 68.

Dans la suite, afin d'exposer la présente invention, il est fait référence uniquement au premier labyrinthe de décharge 60 mais les explications données peuvent s'appliquer de la même façon au deuxième labyrinthe de décharge 62 et/ou au troisième labyrinthe de décharge 66.

Lors de contacts entre la couronne 58 abradable et les léchettes 47, on comprend que le cône aval 48 peut subir de fortes sollicitations à caractère vibratoire, et qu'à cette occasion il puisse vibrer sur un de ses modes propres. Dans ce cas, le niveau vibratoire augmente alors très rapidement, soumettant le rotor formé des pièces mobiles liées au cône aval 48, à des déformations susceptible de dépasser leur limite d'endurance, ce qui conduit en plus d'une dégradation de la couronne 58 abradable à un endommagement possible d'une ou plusieurs des pièces du rotor, voire à la rupture de cette pièce.

Habituellement, le phénomène est très bref, soit qu'un évènement extérieur vienne y mettre fin (changement de vitesse de rotation du rotor, transitoire thermique..), soit que la fréquence propre du rotor endommagé est modifiée, en entraînant un désaccord du système rotor/stator.

En général, pour limiter de tels endommagements, on choisit un matériau abradable adéquat, des formes de léchettes spécifiques ou un nombre de léchettes différent, ou bien on modifie la raideur de la partie statorique (flasque 56) qui supporte la couronne 58 de matériau abradable.

La présente invention a pour objectif de fournir une solution permettant de surmonter les inconvénients de l'art antérieur et en particulier offrant la possibilité d'écarter tout risque vibratoire de l'ensemble rotor/stator.

A cet effet, selon la présente invention, on prévoit les dispositions de la revendication 1 et notamment que la couronne abradable est formée de secteurs angulaires présentant, entre deux secteurs angulaires voisins, une rigidité différente.

De cette manière, on comprend que selon l'invention, on brise la symétrie cyclique de la couronne abradable qui ne présente plus une série de secteurs géométriquement identiques. En effet, la couronne abradable présente soit une alternance de secteurs de rigidité différente soit une succession irrégulière de secteurs de rigidité différente.

Cette solution présente aussi l'avantage supplémentaire d'écarter les risques de phénomène de couplage par une adaptation simple de la partie statorique ou rotorique portant la couronne abradable sans incidence sur les pièces environnantes, de sorte que cette solution peut être mise en oeuvre sur du matériel existant.

De préférence, afin de former ledit dispositif anti-instabilité la couronne abradable comporte des secteurs angulaires d'un premier type présentant une première rigidité et des secteurs angulaires d'un deuxième type présentant une deuxième rigidité différente de la première rigidité. Les secteurs angulaires du premier type présentent une première dimension angulaire et les secteurs angulaires du deuxième type présentent une deuxième dimension angulaire.

Pour des raisons de simplicité de mise en oeuvre et de modélisation, on privilégie le cas où la première dimension de secteur angulaire et la deuxième dimension de secteur angulaire sont identiques, de sorte que les secteurs angulaires du premier type et les secteurs angulaires du deuxième type présentent la même étendue angulaire.

On peut aussi envisager le cas où la première dimension de secteur angulaire et la deuxième dimension de secteur angulaire sont différentes.

La présente invention s'applique également au cas où ledit dispositif anti-instabilité est formé par le fait que la couronne abradable comporte, en outre des secteurs angulaires du premier type et des secteurs angulaires du deuxième type, d'autres secteurs angulaires présentant une autre rigidité, de sorte que le dispositif anti-instabilité comprend le long de la circonférence de la couronne abradable plus de deux rigidités différentes.

La présente invention porte aussi sur un compresseur axial, basse pression, à pression intermédiaire ou haute pression, ou encore un compresseur centrifuge comprenant un ensemble rotor/stator tel que celui présenté précédemment.

La présente invention concerne de plus une turbine, basse pression, à pression intermédiaire ou haute pression, comprenant Un ensemble rotor/stator tel que celui présenté précédemment.

Egalement, la présente invention porte sur une turbomachine, en particulier un turboréacteur, comprenant un ensemble rotor/stator tel que celui présenté précédemment.

Enfin, la présente invention se rapporte au procédé pour empêcher l'apparition d'une instabilité lors d'un contact dans un ensemble stator/rotor de turbomachine comportant un labyrinthe d'étanchéité formé d'une couronne abradable disposée sur l'un parmi le stator et le rotor et d'une léchette annulaire disposé sur l'autre parmi le stator et le rotor, caractérisé par le fait qu'il consiste à aménager la couronne abradable, le long de sa circonférence, en secteurs angulaires présentant, entre deux secteurs angulaires voisins, une rigidité différente.

Lorsque la couronne abradable est disposée sur le stator, on choisit de préférence des nombres de secteurs angulaires de même rigidité de la couronne abradable qui sont différents d'un multiple du nombre d'onde du mode vibratoire du rotor à inhiber.

De cette façon, il est possible de créer une dissymétrie azimutale de la rigidité du stator à l'emplacement de la couronne abradable qui est choisie pour inhiber le mode vibratoire voulu du rotor, et ceci afin d'empêcher tout phénomène de couplage entre le rotor et le stator.

Lorsque la couronne abradable est disposée sur le rotor, on choisit de préférence des nombres de secteurs angulaires de même rigidité de la couronne abradable qui sont différents d'un multiple du nombre d'onde du mode vibratoire de la pièce à inhiber, qui est alors en général le stator qui porte alors les léchettes.

D'autres avantages et caractéristiques de l'invention ressortiront à la lecture de la description suivante faite à titre d'exemple et en référence aux dessins annexés dans lesquels :
- la figure 1, déjà décrite, montre une demi coupe axiale d'un rotor de turbine d'un turboréacteur avec la disposition du flasque et des labyrinthes d'étanchéité en amont des injecteurs principaux,
- la figure 2 est une vue en coupe selon la direction II-II de la figure 1 montrant la couche abradable selon un premier mode de réalisation de l'invention,
- la figure 3 est une représentation azimutale d'une onde avec un nombre d'onde égal à quatre, illustrant la correspondance avec la répartition des matériaux de la couche abradable de la figure 2,
- la figure 4 est une vue en coupe selon la direction II-II de la figure 1 montrant la couche abradable selon un deuxième mode de réalisation de l'invention, et
- les figures 5 et 6 sont des vues en coupe conformes aux figures 3 et 4 correspondant au cas ou la couronne abradable est sur le rotor.

Dans la suite, on entend par nombre d'onde ou nombre de diamètre nodal ou indice de déphasage d'un mode vibratoire, s'agissant d'un système circulaire à symétrie cyclique, le nombre de sommets (ou ventres) ou de creux représentant respectivement les maximums d'amplitude positive ou négative selon une direction radiale de l'onde en question. Le nombre de noeuds, à savoir le nombre de position avec une amplitude 0/nulle de l'onde est le double de ce nombre d'onde.

Par exemple, une onde avec un nombre d'onde de trois correspondant à trois diamètres nodaux, est une onde à six noeuds.

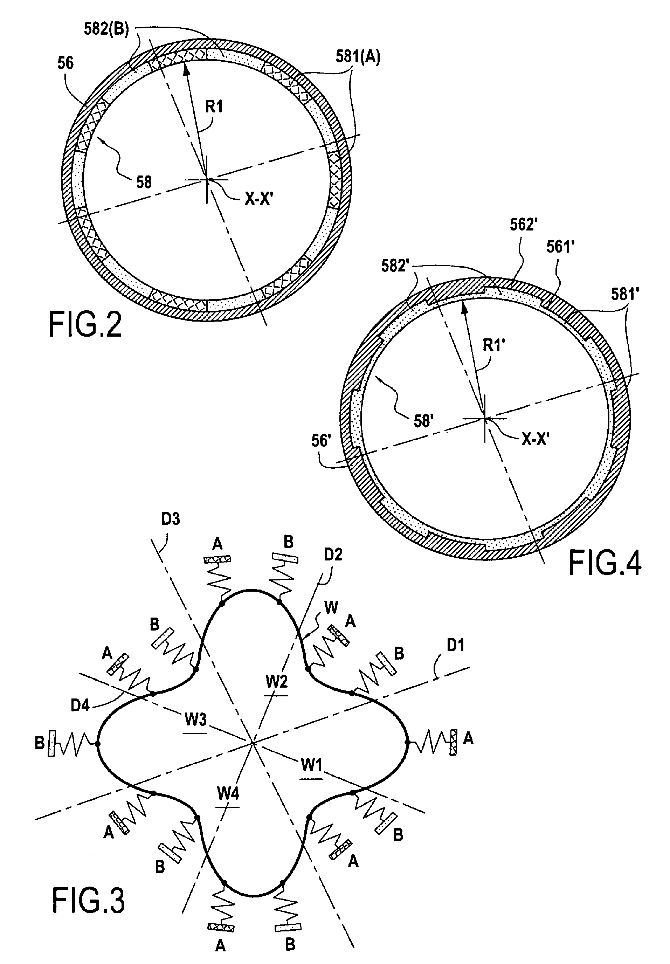

Ainsi, sur la figure 3, une onde W est représentée dans un repère spatial cylindrique (représentation azimutale) et elle présente quatre diamètres nodaux D1 à D4, illustrés en relation avec les huit noeuds de vibration situés entre les quatre creux et les quatre ventres de l'onde W. Ainsi, cette onde W présente un nombre d'onde égal à quatre. L'onde W se décompose en quatre profils sinusoïdaux successifs identiques : sur la figure 3, les quatre périodes spatiales W1 à W4 ont été délimités par les diamètres D1 et D3.

Afin d'illustrer différents modes de réalisation de la présente invention, on a choisit un carter 50 équipé d'une couronne abradable 58 selon l'invention munie d'un dispositif anti-instabilité matérialisé par le fait que la couronne abradable 58 se compose de quatorze secteurs angulaires de deux types présentant deux rigidités différentes et correspondants à une succession de quatorze éléments de même dimension angulaire, deux éléments voisins ayant une rigidité différente.

Ainsi, en conformité avec l'invention, sept (le nombre d'éléments ou de secteurs angulaires de même rigidité du dispositif anti-instabilité) n'est pas un multiple de quatre (nombre d'onde de l'onde W).

Plus précisément, pour chacun des deux modes de réalisation illustrés et décrits ci-après on a prévu seulement deux types de secteurs angulaires avec chacun une rigidité différente

Selon un premier mode de réalisation illustré sur la figure 2, l'invention consiste à réaliser un dispositif anti-instabilité sur la face intérieure de l'extrémité libre annulaire du flasque 56 par le fait que deux secteurs angulaires voisins de la couronne abradable 58 sont formés de matériaux abradables A et B de module de Young différent.

Plus précisément, la couronne abradable 58 comporte alternativement des secteurs angulaires du premier type 581 constitués de couches de matériau abradable A et des secteurs angulaires du deuxième type 582 constitués de couches de matériau abradable B de module de Young différent.

Ici, pour des raisons de simplicité, on a choisi des secteurs angulaires du premier type 581 et des secteurs angulaires du deuxième type 582 qui présentent la même épaisseur et qui recouvre toute la face intérieure de l'extrémité libre annulaire du flasque 56, à savoir toute sa circonférence.

En pratique, pour former cette couche d'abradable sectorisée 58 comprenant quatorze secteurs, dont sept secteurs angulaires du premier type 581 en un matériau A et sept secteurs angulaires 582 du deuxième type en un matériau B, on utilise des matériaux A et B similaires pour lesquels on fait varier la proportion des matériaux entrant dans leur composition afin d'obtenir une différence de module de Young, à savoir de rigidité.

Deux matériaux A et B de nature différente peuvent également être utilisés pour former les éléments du premier type 581 en un premier matériau A et les éléments du deuxième type 582 en deuxième un matériau B.

Par exemple, le premier matériau A est un matériau de type « Metco » (marque déposée), à savoir issu d'une poudre très fine composée d'un polymère (tel que le polyéthylène téréphtalate- PET -par exemple) dont les grains sont recouverts de poudre d'alumine et de silice , et d'un liant. Ce type de poudre est en général projetée par plasma, la projection vaporisant le PET, ce qui conduit à un dépôt poreux ayant une certaine tenue à la température.

Par exemple, le deuxième matériau B est un matériau de type « RTV » (marque déposée), à savoir un composé de caoutchouc de silicone résistant aux variations de température car résultant d'une polymérisation du composé sous pression pour augmenter la densité. Alternativement, le deuxième matériau B est un « silastic » (marque déposée), à savoir un élastomère de silicone.

Les techniques employées pour le dépôt de cette couche d'abradable sectorisée 120 restent inchangées et sont bien entendu liées au(x) matériau(x) utilisé(s).

Par exemple on peut également utiliser un alliage à bas nickel molybdène chrome, en particulier de type Hastelloy (marque déposée), qui est déposé par projection plasma ou encore par projection laser ( la poudre est projetée dans le bain de fusion local engendré par le faisceau laser).

Au final, on obtient une couronne abradable sectorisée 58 pour laquelle la distance radiale R1, entre l'axe X-X' de la turbomachine et la face intérieure de la couronne abradable sectorisée 58, est constante et sensiblement égale au rayon des léchettes 47 du rotor.

Considérons le cas où l'onde W est une onde correspondant à l'un des modes propres du rotor, et qu'en conséquence on souhaite l'inhiber.

Si, comme on le voit sur la figure 3, l'onde W est associée au stator comprenant le carter 50 et le flasque 56 revêtu par la couronne abradable 58 selon la figure 2, on se retrouve avec chaque période spatiale de l'onde qui est associée avec une zone angulaire correspondante de la couronne abradable 58 de rigidité différente, du fait que la couronne abradable 58 est sectorisée.

En l'espèce, la première période spatiale W1 de l'onde W est associée avec le premier quart de la circonférence de la couronne abradable 58 , (à droite sur la figure 3) présentant deux secteurs angulaires du deuxième type 582 (matériau B) et un secteur angulaire du premier type 581 (matériau A) qui se succèdent dans l'ordre BAB (on utilise le sens horaire).

De la même façon, la deuxième période spatiale W2 de l'onde W est associée avec le deuxième quart de la circonférence de la couronne abradable 58 (en haut sur la figure 3) présentant deux secteurs angulaires du premier type 581 (matériau A) et deux secteurs angulaires du deuxième type 582 (matériau B) qui se succèdent dans l'ordre A B A B.

Pour la troisième période spatiale W3 de l'onde W et le troisième quart de la circonférence de la couronne abradable 58 (à gauche sur la figure 3), on trouve la succession de matériaux ABA et pour la quatrième période spatiale de l'onde W et le quatrième quart de la circonférence de la couronne abradable 58 (en bas sur la figure 3), on trouve la succession de matériaux B A B A.

Ainsi, il ressort de ce système que chaque période spatiale W1 à W4 de l'onde W se retrouve associée à une rigidité différente de la portion angulaire correspondante sur la couronne abradable 58. Il en découle que chaque période spatiale W1 à W4 de l'onde W aura une vitesse de propagation différente, de sorte que l'onde W ne peut pas se s'installer dans la couronne abradable 58 lors de phénomènes de prise de contact rotor/stator.

Selon un deuxième mode de réalisation de l'invention représenté sur la figure 4, on utilise une couche d'abradable sectorisée 58' pour laquelle deux secteurs angulaires voisins 581', 582' de la couronne abradable 58' sont formés d'une couche de matériau abradable d'épaisseur différente.

Ainsi, les secteurs angulaires du premier type 581' et les secteurs angulaires du deuxième type 582' sont des couches de matériau abradable d'épaisseurs différentes, disposés par secteur angulaire sur la face intérieure de l'extrémité libre annulaire du flasque 56.

Plus précisément, on a choisi des secteurs angulaires du premier type 581' et des secteurs angulaires du deuxième type 582' qui sont réalisés dans le même matériau et présentent donc le même module de Young et qui sont disposés sur toute la face intérieure de l'extrémité libre annulaire du flasque 56.

A cette fin, pour que la distance radiale R1' (entre l'axe X-X' de la turbomachine et la surface de la couronne abradable sectorisée 58') reste constante, on utilise un flasque 56' dont la face intérieure intérieure est crénelée.

Plus précisément, la face intérieure du flasque 56' comporte des des rainures longitudinales 562' régulièrement espacées entre elles. Ici, on a choisi une distance inter rainures égale au secteur angulaire de chaque rainure longitudinale 562'. Entre deux rainures longitudinales 562' adjacentes est donc formée une nervure longitudinale 561' de même étendue angulaire.

Ainsi, dans le cas de ce deuxième mode de réalisation, on usine la face intérieure de l'extrémité libre annulaire du flasque 56' afin de former l'alternance de nervures longitudinales 561' et de rainures longitudinales 562', puis on fait le dépôt de la couche d'abradable 58'.

Pour cela, on peut réaliser une seule couche d'abradable 58' présentant au départ une épaisseur constante, et donc un relief crénélé image de la surface intérieure de l'extrémité libre annulaire du flasque 56', qui est ensuite usinée en surface pour délimiter dans l'extrémité libre annulaire du flasque 56' un logement de rayon R1'.

Alternativement, on peut déposer de façon séparée le matériau formant les secteurs angulaires du premier type 581' et les secteurs angulaires du deuxième type 582', respectivement sur les nervures longitudinales 561' et les rainures longitudinales 562' de la surface intérieure de l'extrémité libre annulaire du flasque 56', et ceci directement avec une épaisseur qui est différente entre les secteurs angulaires du premier type 581' et les secteurs angulaires du deuxième type 582'. En effet, l'écart d'épaisseur entre les secteurs angulaires du premier type 581' et les secteurs angulaires du deuxième type 582' est égale à la profondeur des rainures longitudinales 562'. Plus précisément, les secteurs angulaires du premier type 581' recouvrant les nervures longitudinale 561' sont moins épais que les secteurs angulaires du deuxième type 582' recouvrant les rainures longitudinales 562'.

Les premier et deuxième modes de réalisation de l'invention qui viennent d'être décrits en relation avec les figure 2 et 3 correspondent au cas où la couronne abradable 58/58' est disposée sur la face intérieure d'un flasque 56/56' formant une pièce thermomécanique appartenant à un stator de turbomachine.

Dans ce cas, on prévoit que le nombre total de secteurs angulaires (quatorze dans les exemples) est différent d'un multiple du nombre d'onde (quatre dans les exemples) d'un mode vibratoire à inhiber du rotor de la turbine 108.

On comprend donc qu'en choisissant, pour la couronne abradable selon l'invention d'une pièce thermomécanique appartenant à un stator, des nombres de secteurs angulaires du premier type et de secteurs angulaires du deuxième type différents d'un multiple du nombre d'onde du mode vibratoire à inhiber du rotor, on empêche toute propagation de ce mode vibratoire au stator lors de phénomènes de prise de contact rotor/stator.

Ces exemples de mise en oeuvre ne représentent qu'un cas particulier d'onde W (avec un nombre d'onde égal à quatre) et de nombre (à savoir sept) de secteurs angulaires du premier type et de secteurs angulaires du deuxième type pour le dispositif anti-instabilité associé.

De façon générale, il est nécessaire d'adapter la succession des secteurs angulaires du premier type et des secteurs angulaires du deuxième type, à savoir leur nombre et leur étendue angulaire individuelle, aux fins de constituer une couronne abradable présentant un motif adapté au nombre d'onde du ou des modes vibratoires du rotor que l'on souhaite perturber.

Selon la présente invention, il faut entendre par matériau abradable soit un matériau « plein », soit une structure alvéolaire dite en nid d'abeilles.

Ainsi, dans le premier mode de réalisation de la figure 2, les secteurs angulaires du premier type 581 et les secteurs angulaires du deuxième type 582, de même épaisseur peuvent être respectivement réalisés dans deux matériaux abradables A et B de module de Young différent qui sont des structures en nid d'abeilles de rigidité globale différente. Par exemple, les secteurs de différentes rigidités peuvent être obtenus par l'adoption d'une structure géométrique de nid d'abeilles différente ou par l'utilisation d'un matériau de caractéristique élastique différent pour former la structure en nid d'abeilles.

On peut encore envisager le cas où le matériau abradable A est un matériau « plein et le matériau abradable B est un matériau à structure en nid d'abeilles.

Egalement, le deuxième mode de réalisation de la figure 4 doit se comprendre comme pouvant être obtenu par un matériau abradable structure en nid d'abeilles d'épaisseur différente entre deux secteurs angulaires voisins 581', 582' de la couronne abradable 58'.

Sur la figure 1, la couronne abradable 58 est disposée sur un stator en étant dirigée radialement en direction de l'axe de rotation X-X' de la turbomachine.

Cependant, on conçoit tout à fait que la présente invention peut également s'appliquer à une couronne abradable disposée sur un rotor et dirigée radialement en direction opposée à l'axe de rotation X-X'. Dans ce cas, on choisit de préférence des nombres de secteurs angulaires de même rigidité de la couronne abradable qui sont différents d'un multiple du nombre d'onde du mode vibratoire de la pièce à inhiber, qui est alors en général le stator qui porte alors les léchettes.

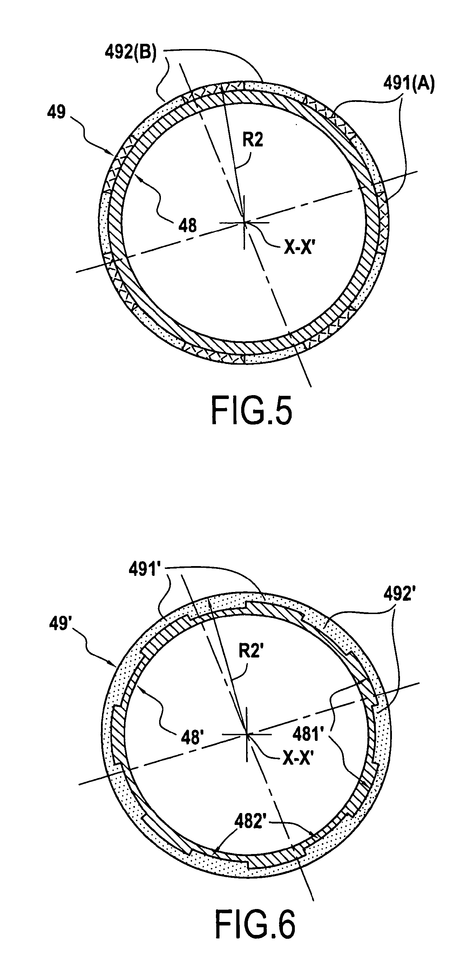

Ainsi, selon une alternative de réalisation de ces premier et deuxième modes de réalisation de l'invention représentée sur les figures 5 et 6, la couronne abradable est disposée sur la face extérieure d'une pièce thermomécanique du rotor de turbomachine.

Si on applique cette alternative de réalisation au premier labyrinthe de décharge 60 de la figure 1, c'est la face extérieure du cône aval 48 qui est équipée d'un dispositif anti-instabilité sous la forme d'une couronne abradable 49 ou 49', à la place des léchettes 47, tandis que la couronne abradable 58 (ou 58') de la figure 1 est équipée de léchettes (non représentées).

Sur la figure 5, la surface extérieure du cône aval 48 est revêtue d'une couronne abradable 49 sectorisée composée de quatorze secteurs angulaires de même étendue angulaire et de même épaisseur, se répartissant en une alternance de sept secteurs angulaires du premier type 491 en un matériau A et sept secteurs angulaires 492 du deuxième type en un matériau B. Cette couronne abradable 49 présente une face extérieure écartée de la distance radiale R2 depuis l'axe X-X' de la turbomachine.

Sur la figure 6, la surface extérieure du cône aval 48 comporte une piste annulaire crénelée par le fait que cette piste est divisée en quatorze secteurs angulaires de même étendue angulaire, se répartissant en une alternance de sept nervures longitudinale 481' et sept rainures longitudinales 482'. La face extérieure de la couronne abradable 49' est située à une distance radiale R2' de l'axe X-X' de la turbomachine.

La couronne abradable 49' comporte une alternance de sept secteurs angulaires du premier type 491' et de sept secteurs angulaires du deuxième type 492' qui ne diffèrent entre eux que par leur épaisseur qui présente un écart égal à la profondeur des rainures longitudinales 482', les secteurs angulaires du premier type 491' recouvrant les nervures longitudinale 481' étant moins épais que les secteurs angulaires du deuxième type 492' recouvrant les rainures longitudinales 482'.

Sur les figures, l'application de la présente invention est représentée en relation avec une portion aval d'un compresseur axial à haute pression.

Toutefois, il faut comprendre que la présente invention peut être mise en oeuvre dans d'autres zones d'une turbomachine, notamment dans d'autre portions d'un compresseur axial à pression intermédiaire, dans un compresseur axial à basse pression, dans un compresseur centrifuge, ou encore dans une turbine à haute pression, à basse pression ou à pression intermédiaire.

## Revendications

1. Ensemble rotor/stator comportant une première pièce thermomécanique (56, 48) de turbomachine de révolution autour d'un axe longitudinal (X-X'), comprenant au moins une couronne abradable (58 ; 49 ; 58' ; 49') formée de secteurs angulaires (581, 582 ;491, 492 ; 581', 582' ;491', 492'), ladite première pièce thermomécanique appartenant à l'un parmi le stator et le rotor, et une deuxième pièce thermomécanique (56, 48) de révolution appartenant à l'autre parmi le stator et le rotor, **caractérisé en ce que** lesdits secteurs angulaires (581, 582 ;491, 492 ; 581', 582' ;491', 492') de la couronne abradable (58 ; 49 ; 58' ; 49') présentent, entre deux secteurs angulaires voisins, une rigidité différente et **en ce que** ladite deuxième pièce thermomécanique (56, 48) comprend une léchette annulaire (47) destinée à coopérer avec ladite couronne abradable (58 ; 58' ; 49 ; 49') pour former un labyrinthe d'étanchéité.

2. Ensemble rotor/stator (56, 48) selon la revendication 1, **caractérisé en ce que** deux secteurs angulaires voisins (581, 582 ;491, 492) de la couronne abradable (58 ; 49) sont formés de matériaux abradables de module de Young différent.

3. Ensemble rotor/stator (56, 48) selon l'une quelconque des revendications précédentes, **caractérisé en ce que** deux secteurs angulaires voisins (581', 582' ;491', 492') de la couronne abradable (58' ; 49') sont formés d'une couche de matériau abradable d'épaisseur différente.

4. Ensemble rotor/stator (56, 48) selon l'une quelconque des revendications précédentes, **caractérisé en ce que** les nombres de secteurs angulaires (581, 582 ; 581', 582') de même rigidité de la couronne abradable (58 ; 58') sont différents d'un multiple du nombre d'onde d'un mode vibratoire à inhiber de l'autre parmi le stator et le rotor.

5. Ensemble rotor/stator (56, 48) selon l'une quelconque des revendications précédentes, **caractérisé en ce que** ladite première pièce thermomécanique appartient à un rotor de turbomachine et **en ce que** la couronne abradable (49 ; 49') est disposée sur la face extérieure de ladite première pièce thermomécanique (48).

6. Ensemble rotor/stator (56, 48) selon l'une quelconque des revendications 1 à 4, **caractérisé en ce que** ladite première pièce (56) thermomécanique appartient à un stator de turbomachine et **en ce que** la couronne abradable (58 ; 58') est disposée sur la face intérieure de ladite première pièce thermomécanique (56).

7. Ensemble rotor/stator (56, 48) selon l'une quelconque des revendications précédentes, **caractérisé en ce que** la couronne abradable (58 ; 49 ; 58' ; 49') comporte des éléments d'un premier type présentant une première rigidité et une première dimension de secteur angulaire, et des éléments d'un deuxième type présentant une deuxième rigidité différente de la première rigidité et une deuxième dimension de secteur angulaire qui est identique à la première dimension de secteur angulaire.

8. Ensemble rotor/stator (56, 48) selon l'une quelconque des revendications 1 à 6, **caractérisé en ce que** la couronne abradable (58 ; 49 ; 58' ; 49') comporte des éléments d'un premier type présentant une première rigidité et une première dimension de secteur angulaire, et des éléments d'un deuxième type présentant une deuxième rigidité différente de la première rigidité et une deuxième dimension de secteur angulaire qui est différente de la première dimension de secteur angulaire.

9. Ensemble rotor/stator (56, 48) selon l'une quelconque des revendications 1 à 8, **caractérisé en ce qu'**il forme un compresseur.

10. Ensemble rotor/stator (56, 48) selon l'une quelconque des revendications 1 à 8, **caractérisé en ce qu'**il forme une turbine.

11. Turbomachine, en particulier turboréacteur, comprenant un ensemble rotor/stator (56, 48) selon l'une quelconque des revendications 1 à 8.

12. Procédé pour empêcher l'apparition d'une instabilité lors d'un contact dans un ensemble stator/rotor de turbomachine comportant un labyrinthe d'étanchéité formé d'une couronne abradable (58 ; 58' ; 49 ; 49') disposée sur l'un parmi le stator et le rotor et d'une léchette annulaire (47) disposé sur l'autre parmi le stator et le rotor, **caractérisé par le fait qu'**il consiste à aménager la couronne abradable (58 ; 58' ; 49 ; 49') en secteurs angulaires (581, 582 ; 581', 582' ;491, 492 ; 491', 492') présentant, entre deux secteurs angulaires voisins, une rigidité différente.

13. Procédé selon la revendication précédente, **caractérisé en ce que** la couronne abradable (58 ; 58') est disposée sur le stator (56) et **en ce que** les nombres de secteurs angulaires (581, 582 ; 581', 582') de même rigidité de la couronne abradable (58 ; 58') sont différents d'un multiple du nombre d'onde du mode vibratoire du rotor (48) à inhiber.

## Claims

1. A rotor and stator assembly comprising a first turbomachine thermomechanical part (56, 48) forming a body of revolution about a longitudinal axis (X-X'), and including at least one abradable ring (58; 49; 58'; 49') made up of angular sectors (581, 582; 491, 492; 581', 582'; 491', 492'), said first thermomechanical part forming a part of one of the stator and the rotor, and a second thermomechanical part (56, 48) forming a body of revolution that is a part of the other one of the stator and the rotor, **characterized in that** said angular sectors (581, 582; 491, 492; 581', 582'; 491', 492') of the abradable ring (58; 49; 58'; 49') present different stiffenesses between adjacent pairs of angulars sectors and **in that** said second thermomechanical part (56, 48) includes an annular wiper (47) for co-operating with said abradable ring (58; 58'; 49; 49') to form a labyrinth seal.

2. A rotor and stator assembly (56, 48) according to claim 1, **characterized in that** two adjacent angular sectors (581, 582; 491, 492) of the abradable ring (58; 49) are made up of abradable materials having different Young's moduluses.

3. A rotor and stator assembly (56, 48) according to any preceding claim, **characterized in that** two adjacent angular sectors (581', 582'; 491', 492') of the abradable ring (58'; 49') are made of layers of abradable material presenting different thicknesses.

4. A rotor and stator assembly (56, 48) according to any preceding claim, **characterized in that** the numbers of angular sectors (581, 582; 581', 582') of given stiffness in the abradable ring (58; 58') are not equal to a multiple of the wave number of a vibratory mode to be inhibited of the other part among the stator and the rotor.

5. A rotor and stator assembly (56, 48) according to any preceding claim, **characterized in that** said first thermomechanical part forms part of a turbomachine rotor and **in that** the abradable ring (49; 49') is disposed on the outside face of the thermomechanical part (48).

6. A rotor and stator assembly (56, 48) according to any one of claims 1 to 4, **characterized in that** said first thermomechanical part forms part of a turbomachine stator and **in that** the abradable ring (58; 58') is disposed on the inside face of said first thermomechanical part (56).

7. A rotor and stator assembly (56, 48) according to any preceding claim, **characterized in that** the abradable ring (58; 49; 58', 49') comprises elements of a first type presenting a first stiffness and first angular sector size, and elements of a second type presenting a second stiffness different from the first stiffness, and a second angular sector dimension that is identical to the first angular sector dimension.

8. A rotor and stator assembly (56, 48) according to any one of claims 1 to 5, **characterized in that** the abradable ring (58; 49; 58'; 49') comprises elements of a first type presenting a first stiffness and a first angular sector dimension, and elements of a second type presenting a second stiffness different from the first stiffness and a second angular sector dimension that is different from the first angular sector dimension.

9. A rotor and stator assembly (56, 48) according to any one of claims 1 to 8, **characterized in that** it forms a compressor.

10. A rotor and stator assembly (56, 48) according to any one of claims 1 to 8, **characterized in that** it forms a turbine.

11. A turbomachine, in particular a turbojet, including a rotor and stator assembly (56, 48) according to any one of claims 1 to 8.

12. A method of preventing instability appearing during contact in a stator and rotor assembly of a turbomachine that includes a labyrinth seal made up of an abradable ring (58; 58'; 49; 49') disposed on one of the stator and the rotor and an annular wiper (47) disposed on the other one of the stator and the rotor, the method being **characterized by** the fact that it consists in arranging the abradable ring (58; 58'; 49; 49') in the form of angular sectors (581, 582; 581', 582'; 491, 492; 491', 492') that present different stiffnesses between adjacent pairs of angular sectors.

13. A method according to the preceding claim, **characterized in that** the abradable ring (58; 58') is disposed on the stator (56), and **in that** the numbers of angular sectors (581, 582, 581', 582') having the same stiffness in the abradable ring (58; 58') are not equal to a multiple of the wave number of the vibratory mode to be inhibited of the rotor (48).

## Patentansprüche

1. Rotor/Stator-Anordnung mit einem um eine Längsachse (X-X') umlaufenden ersten thermomechanischen Teil (56, 48) einer Turbomaschine, umfassend wenigstens einen Abriebkranz (58; 49; 58'; 49'), der von Winkelsektoren (581, 582; 491, 492; 581 582'; 491', 492') gebildet ist, wobei das erste thermomechanische Teil zu dem einen aus Stator und Rotor gehört, und mit einem zweiten thermomechanischen Rotationsteil (56, 48), das zu dem anderen aus Stator und Rotor gehört, **dadurch gekennzeichnet, daß** die Winkelsektoren (581, 582; 491, 492; 581', 582'; 491', 492') des Abriebkranzes (58; 49; 58'; 49'), zwischen zwei benachbarten Winkelsektoren, eine unterschiedliche Steifigkeit aufweisen und daß das zweite thermomechanische Teil (56, 48) eine ringförmige Zunge (47) aufweist, die dazu bestimmt ist, mit dem Abriebkranz (58; 58', 49, 49') zusammenzuwirken, um eine Labyrinthdichtung zu bilden.

2. Rotor/Stator-Anordnung (56, 48) nach Anspruch 1, **dadurch gekennzeichnet, daß** zwei benachbarte Winkelsektoren (581, 582; 491, 492) des Abriebkranzes (58; 49) aus abriebfähigen Werkstoffen mit unterschiedlichem Elastizitätsmodul gebildet sind.

3. Rotor/Stator-Anordnung (56, 48) nach einem der vorhergehenden Ansprüche, **dadurch gekennzeichnet, daß** zwei benachbarte Winkelsektoren (581', 582'; 491', 492') des Abriebkranzes (58'; 49') aus einer Schicht aus abriebfähigem Werkstoff mit unterschiedlicher Dicke gebildet sind.

4. Rotor/Stator-Anordnung (56, 48) nach einem der vorhergehenden Ansprüche, **dadurch gekennzeichnet, daß** die Anzahl der Winkelsektoren (581, 582; 581', 582') gleicher Steifigkeit des Abriebkranzes (58; 58') um ein Vielfaches von der Wellenzahl einer zu verhindernden Schwinungungsmode des anderen aus Stator und Rotor abweicht.

5. Rotor/Stator-Anordnung (56, 48) nach einem der vorhergehenden Ansprüche, **dadurch gekennzeichnet, daß** das erste thermomechanische Teil zu einem Turbomaschinenrotor gehört und daß der Abriebkranz (49; 49') an der Außenseite des ersten thermomechanischen Teils (48) angeordnet ist.

6. Rotor/Stator-Anordnung (56, 48) nach einem der Ansprüche 1 bis 4, **dadurch gekennzeichnet, daß** das erste thermomechanische Teil (56) zu einem Turbomaschinenstator gehört und daß der Abriebkranz (58; 58') an der Innenseite des ersten thermomechanischen Teils (56) angeordnet ist

7. Rotor/Stator-Anordnung (56, 48) nach einem der vorhergehenden Ansprüche, **dadurch gekennzeichnet, daß** der Abriebkranz (58; 49; 58', 49') Elemente eines ersten Typs, die eine erste Steifigkeit und eine erste Winkelsektorenabmessung aufweisen, sowie Elemente eines zweiten Typs umfaßt, die eine von der ersten Steifigkeit abweichende zweite Steifigkeit und eine mit der ersten Winkelsektorenabmessung identische zweite Winkelsektorenabmessung aufweisen.

8. Rotor/Stator-Anordnung (56, 48) nach einem der Ansprüche 1 bis 6, **dadurch gekennzeichnet, daß** der Abriebkranz (58; 49; 58', 49') Elemente eines ersten Typs, die eine erste Steifigkeit und eine erste Winkelsektorenabmessung aufweisen, sowie Elemente eines zweiten Typs umfaßt, die eine von der ersten Steifigkeit abweichende zweite Steifigkeit und eine von der ersten Winkelsektorenabmessung abweichende zweite Winkelsektorenabmessung aufweisen.

9. Rotor/Stator-Anordnung (56, 48) nach einem der Ansprüche 1 bis 8, **dadurch gekennzeichnet, daß** sie einen Verdichter bildet.

10. Rotor/Stator-Anordnung (56, 48) nach einem der Ansprüche 1 bis 8, **dadurch gekennzeichnet, daß** sie eine Turbine bildet.

11. Turbomaschine, insbesondere Turbostrahltriebwerk, mit einer Rotor/Stator-Anordnung (56, 48) nach einem der Ansprüche 1 bis 8.

12. Verfahren zum Verhindern des Auftretens einer Instabilität während eines Kontakts bei einer Stator/Rotor-Anordnung einer Turbomaschine mit einer Labyrinthdichtung, die von einem Abriebkranz (58; 58'; 49; 49'), welcher an einem aus Stator und Rotor angeordnet ist, und von einer ringförmigen Zunge (47), die an dem anderen aus Stator und Rotor angeordnet ist, gebildet ist, **dadurch gekennzeichnet, daß** es darin besteht, den Abriebkranz (58; 58'; 49; 49') aus Winkelsektoren (581, 582; 581', 582'; 491, 492; 491'; 492') anzuordnen, die zwischen zwei benachbarten Winkelsektoren eine unterschiedliche Steifigkeit aufweisen.

13. Verfahren nach dem vorhergehenden Anspruch, **dadurch gekennzeichnet, daß** der Abriebkranz (58; 58') an dem Stator (56) angeordnet ist und daß die Anzahl der Winkelsektoren (581, 582; 581', 582') gleicher Steifigkeit des Abriebkranzes (58; 58') um ein Vielfaches von der Wellenzahl der zu verhindernden Schwinungungsmode des Rotors (48) abweicht.
